# EUROPEAN PATENT APPLICATION

(11) **EP 4 765 785 A1**
(43) Date of publication of application: **24.06.2026**
(21) Application number: 24383396.9
(22) Date of filing: 18.12.2024
(51) Int. Cl.: H04L 67/63, H04L 67/75

(54) **METHOD AND ALTO SERVER FOR ADVANCED PROCESSING AND EXPOSURE OF NETWORK INFORMATION**

(71) Applicant: Telefónica, S.A., 28280 Madrid (ES)
(72) Inventor: Contreras Murillo, Luis Miguel, 28013 Madrid (ES); Muñiz Da Costa, Alejandro, 28013 Madrid (ES)
(74) Representative: Carlos Hernando, Borja

(57) **Abstract**

A method and an ALTO server method for advanced processing and exposure of network information are proposed. The method comprises providing an ALTO server formed by modular entities including an exposure module, an ALTO core, ALTO applications, and reading modules; periodically monitoring, by the reading modules, a transport network by generating network status information based on network information collected from network domains; processing, by the core, the generated network status information using a processing functionality of the core, obtaining a network view; receiving, by the exposure module, an advanced network information request from an ALTO client; routing the advanced network information request to one of the applications; providing, by the core, the obtained network view to the application; applying, by the application, an application functionality to the network view, obtaining a response to the advanced network information request; and routing the response to the advanced network information request back to the client.

## Description

### TECHNICAL FIELD

The present invention relates to a method and an Application Layer Traffic Optimization (ALTO) Protocol server for advanced processing and exposure of network information.

### BACKGROUND OF THE INVENTION

From the perspective of functionality, the Application Layer Traffic Optimization (ALTO) Protocol is a network protocol standardized by the Internet Engineering Task Force (IETF) that provides information about the network topology and the location of network resources based on parameters such as the number of hops required to reach each node, the latency between them or the bandwidth available on each link. In addition, it manages information from different sources, being able to integrate network information with computational information. These features of the ALTO protocol allow applications to make informed decisions on how to optimize the use of network resources and reduce congestion. For example, a video streaming application could use the ALTO protocol to obtain information about the location and capacity of content servers and select the server that is closest to the user and has the least traffic load at that time (https://www.ietf.org/archive/id/draft-contreras-alto-ietf-nef-01.txt).

From the perspective of an APP-based architecture, this paradigm has proven to be effective. The ORAN framework is a prime example of how defining a decentralized and modular architecture allows the operator to better adapt deployments to specific contexts without compromising interoperability. It should be noted that these APPs are for actions within the O-RAN controller (i.e., the Service Management and Orchestration - SMO - framework), rather than for preparing information to be exposed ( Controller applications in O-RAN, e.g.).

The main problem nowadays of ALTO implementations is that any new functionality is being considered to be part of the ALTO server. This implies an ALTO server incorporating multiple features. This monolithic architecture is not optimal for a distributed scenario in which different components need to be monitored/managed in different placements. A better architecture is to go towards a simple ALTO server with specialized APPs producing and exposing advanced information based on simple ALTO services, making it open and avoiding vendor and product locking.

New and different non-monolithic ALTO approaches including all the needed functionality for exposing network information are therefore required.

### DESCRIPTION OF THE INVENTION

Thus, an object of the present invention is to provide a new modular architecture for implementing ALTO protocol and functionality. In the proposed architecture, an ALTO Server is divided into four main sections. A number of ALTO APPs can consume basic ALTO information, then offering and exposing the advanced processed information to ALTO clients. The APPs can be in charge of advanced processing of the information, such as multipath information, energy consumption in the path, statistical processing of performance metrics (e.g. packet loss below a threshold), etc. Likewise, the ALTO client is expected to discover the available ALTO APPs by means of interacting with an ALTO core and request advanced network information to such APPs via the ALTO core.

Embodiments of the present invention provide, according to a first aspect, a method for advanced processing and exposure of network information (including compute processing or storage nodes, radio base stations, service functions, applications instances, or any other integral part of a communication service). The method comprises providing an ALTO server formed by different modular entities including an exposure module, an ALTO core, one or more ALTO applications, and one or more reading modules, the latter being located between the transport network (or other network domains) and the application level; periodically monitoring, by the one or more reading modules, the transport network by generating network status information based on network information collected from one or more network domains, the network information comprising metadata indicating a type of metric, a metric value, and a timestamp; processing, by the ALTO core, the generated network status information received from the one or more reading modules, using at least one processing functionality of the ALTO core, obtaining a network view as a result (including, but not only, topological information); receiving, by the exposure module, an advanced network information request from an ALTO client; routing the advanced network information request to one of the ALTO applications based on the advanced network information request; providing, by the ALTO core, the obtained network view to the ALTO application; applying, by the ALTO application, at least one application functionality to the network view, obtaining a response to the advanced network information request as a result; and routing the response to the advanced network information request back to the ALTO client.

Embodiments of the present invention also provide, according to a second aspect, an ALTO server for advanced processing and exposure of network information. The ALTO server comprises a modular architecture formed by an exposure module, one or more ALTO applications, an ALTO core, and one or more reading modules located between the transport network (or other network domains) and the application level. The ALTO core is configured to receive network status information from the one or more reading modules, the network status information being generated by the one or more reading modules based on network information collected from one or more network domains, the network information comprising metadata indicating a type of metric, a metric value, and a timestamp; process the network status information using at least one processing functionality of the ALTO core, obtaining a network view as a result (including additional information such as metrics, properties, etc.); after an advanced network information request being received by the exposure module from an ALTO client and routed to one of the ALTO applications based on the advanced network information request, provide the obtained network view (including additional information that could result from the processing of metrics, properties, etc.) to the ALTO application, the latter further applying at least one application functionality to the network view, obtaining a response to the advanced network information request as a result. The ALTO server can then route the response to the advanced network information back to the ALTO client.

In some embodiments, the advanced network information request is routed by the exposure module to said ALTO application directly. Alternatively, in other embodiments, the advanced network information request is routed by the exposure module to said ALTO application through the ALTO core.

In some embodiments, the at least one processing functionality of the ALTO core comprises an Internet Engineering Task Force (IETF) Request for Comments (RFC 7285) functionality.

In some embodiments, the at least one application functionality comprises applying at least one of a filtering technique and an encryption technique.

In some embodiments, the one or more ALTO applications and the ALTO core communicate via a communication bus.

In some embodiments, before processing the generated network status information, the method additionally collects additional network information from other network domains or segments (e.g., information from compute domain such as CPUs, memory and storage, information from the radio domain such as tracking areas, etc.).

In some embodiments, before receiving the advanced network information request from the ALTO client, the method associates properties for nodes, links or any other element represented in the network information.

In some embodiments, the provided network view can include network and cost information (understanding by cost any applicable metric), as well as properties that could be associated to network links or nodes.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The modular implementation approach of the present invention brings three main advantages:
1. Reduces dependencies with the technologies used in the implementation of the network. Allowing multi-vendor implementations, adding complementary modules from different implementors.
2. Allows a modular and "easy-to-configure" architecture for ALTO systems, modifying the functionalities provided in an easy way depending on the context where is needed. Also, this allows providing an incremental system, creating the possibility of incorporating additional advanced features along time.
3. Enhances the distributed paradigm, being able to deploy different components in different network placements according to the needs (e.g., locating the modules in nodes near low-level technological controllers and letting the ALTO server and functions in a centralized point) and adjusting the ALTO server capabilities to the network and ecosystem status.

The defined opened and extensible architecture avoids vendor and product locking and facilitates the development of ALTO applications by multiple parties. Also, it enhances selling points, providing the possibility to create easily a customized ALTO implementation and/or deploy a basic toolkit and improve it with additional advanced functionalities without modifying the existing code. Finally, the proposed approach fits better with distributed scenarios or edge-cloud environments with multiple potential monitoring/manage networks, as it allows to deploy different components in different placements.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 schematically illustrates the integration of core functionalities plus customized add-ons functionalities.
Fig. 2 schematically illustrates the high-level architecture view of the present invention, according to an embodiment.
Fig. 3 illustrates the workflow for a normal ALTO modular behavior, according to an embodiment.
Fig. 4 illustrates an alternative service bus architecture, according to an embodiment.
Fig. 5 is an example of a potential minimal Class View for ALTO modular.

### DETAILED DESCRIPTION OF THE INVENTION AND OF PREFERRED EMBODIMENTS

Currently, implementing a new feature in ALTO requires global inclusion across all servers running versions equal to or later than the current one. This approach can lead to increased complexity as ALTO functionalities (such as new filters, metrics, or data sources) scale horizontally. Each new implementation adds proportional complexity, often incorporating functionalities that exceed the intended scope of the implementation.

With the proposed architecture, upgrading an ALTO server to include new functionality becomes significantly less complex. Instead of modifying the entire system, the update can be integrated through a modular package. This architecture also allows APIs to abstract higher-level implementations, reducing scalability challenges while maintaining compatibility with established standards.

A clear example of this is the handling of data sources. In the current monolithic system, if a research group develops functionality to extract network information from an alternative source (e.g., an SDN controller), this functionality must be implemented across all ALTO server versions due to interdependencies. The proposed architecture introduces a paradigm shift by separating ALTO into three independent layers: information sources, functionalities and filters, and exposure methods.

Each ALTO server would be free to decide how it wishes to be deployed, depending on the environment to be monitored and the desired exposure method for its context, as well as the number of filters, functionalities, and metrics to be exposed. Each server will have to specify at least one module at each level, with the original version (i.e., read by BGP, simple filtering and exposure by HTTPS) being selected in case no other one is provided at launch.

This new development paradigm implies less coupling between differentiated functionalities, reducing complexity in the development of new components. In addition, there would be two internal well-defined points of interaction that are likely to be modeled, thus standardizing internal communications between modules (a task that would be very much in line with the main objectives of the IETF). Finally, it will allow a distributed development in which each party is transparent to the others, having knowledge of the information transferred rather than how it was generated.

In the following, the workflow and a typical architecture for the present invention will be outlined. It is important to note that implementation details will not be discussed, as they are flexible and can be tailored by developers according to their specific needs.

The present invention defines a new modular approach for implementing ALTO protocol, reducing dependencies from the technology underline and the ecosystem where it is deployed. In the proposed approach, the ALTO Server is divided into four main sections: ALTO exposure module (such as APIs), ALTO core, ALTO reading modules and ALTO Applications. Exposure module, reading modules and applications are individual add-ons that the ALTO server can install and merge in order to have a better view of monitored networks and an adaptable set of capabilities to be combined as the network manager desires.

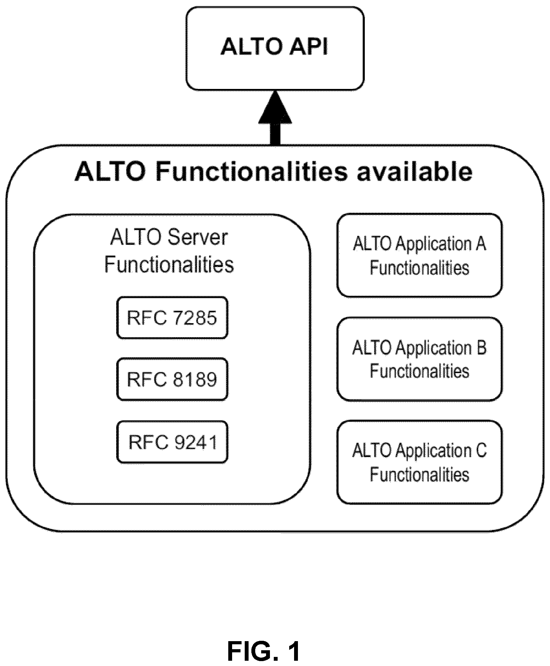

In the proposed architecture, the ALTO core has a reduced set of functionalities that are associated with the ones defined in RFC 7285 and potentially in other RFCs with core improvements such as RFC 8189 (Multi-Cost Application-Layer Traffic Optimization (ALTO)) and RFC 9241 (An Extension for Application-Layer Traffic Optimization (ALTO): Entity Property Maps). The ALTO server is needed to indicate which capabilities exposes, just as it is indicated in RFC 7285. Also, if other additional capabilities (as the ones defined in RFC 8896 or draft-contreras-alto-service-edge-10) are also added as ALTO application components, it would be needed to be also indicated as it is shown in Fig. 1. To be state-aware, the components to be loaded are defined in deployment-time; and therefore the API instantiated can be informed of each of the applications deployed.

To define which components are going to be deployed and how they will communicate there are many possibilities from static ones as having different compiled packages with different configurations depending on the scenario, or even dynamic ones as occur in technologies as Kubernetes, where it is possible to have each component as a pod and indicate how many instances of each pod do we want and how they are going to communicate (internal services, ports and so on). Each solution can have pros and cons and depending on the scenario it could be more interesting to provide one solution or another. This potential agile reconfiguration adjusting the system to the needs is just possible in a modular architecture as the monolithic one may require much more modifications in the code and redundances that would increase the complexity and reduce the performance.

Also, to be as technological agnostic as possible, it is mandatory to standardize the interfacing with a neutral view that provides the minimum common set of information. This information should be enough to create ALTO's maps but not too specific to limit the scope to a specific technology. With this perspective, it is possible to obtain information from different technologies as BGP, LLDP, SDN controllers or TAPI, being this information complementary to application specific information as QKD capabilities or computing information from virtualization sources. As here it's shown, there are too many potential sources of information, making possible the agile integration of a set for any of them, without more changes than the creation of the module. This view may be similar to what occurs with SDN controllers, where there are low-level technological controllers and a hierarchical one over them, that works integrating and managing the information collected.

As explained before, the present invention divides the ALTO functionalities into three levels of modules, in addition to the ALTO core, which provides the basic functionality and manages the integrated data:
- Level 1. reading modules: these modules are associated with obtaining network information. Each module would listen to a different network manager, processing the information and indicating to a higher level the source ID and the information already modeled. The network information gathered includes metrics (e.g. performance metrics, link costs, quantifiable characteristics), properties associated to nodes / links / endpoints, topology and other relevant information. Complementing the transport network information, additional information from other network domains may be obtained such as compute domain (e.g., CPU, storage, memory, ...) or radio domain (e.g., tracking areas, radio functional split topology, access points, etc.)
- Level 2. ALTO application modules: These modules listen to the different topology updates, generate different network views, and can apply filters or modifications. It is at this level where ALTO information is generated and where filters or data integrations are applied. These modules will read directly for the ALTO Core, providing additional functionalities to the capabilities and information managed by the ALTO Core. Some functions could be RFCs not implemented in the Core or customized functions to be managed internally.
- Level 3. Exposure modules: They obtain the network views (or ALTO maps, either network or cost maps or both) already processed and expose them through an API that has been decided to send. When a network request arrives, it performs a query to the corresponding processing module and retransmits the information unaltered but packaged as necessary. If the method is asynchronous, it will periodically request the status of the network views and if changes are detected, it will expose them.

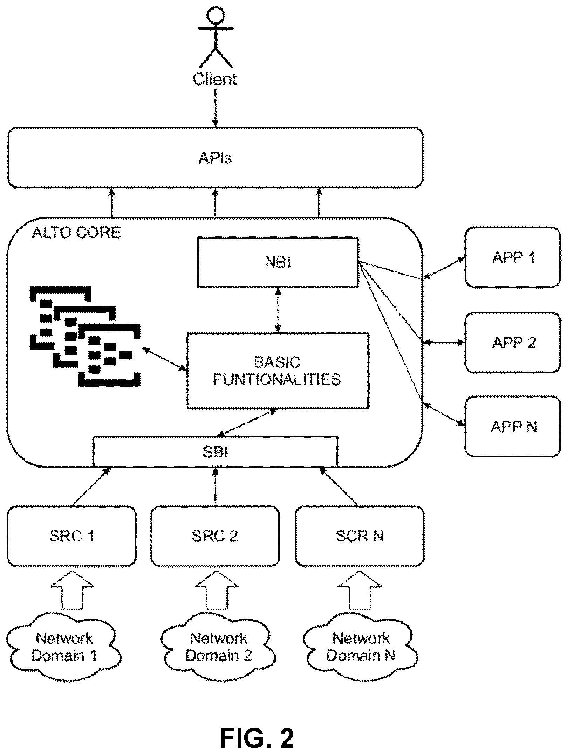

Fig. 2 illustrates an embodiment of the proposed architecture. In the figure, the three levels of modules exposed before can be seen: reading modules (SRC X), applications (APP X) and exposure module (APIs). The reading modules are between the network and the application level. These modules generate a set of data in which a body with the collected information (nodes, links and weights) will be passed to them in the format that is most convenient for the developer. Additionally, this information can be accompanied by metadata, for instance indicating the source ID, the type of metric passed and a timestamp to handle updates, among others.

This data will be processed by the main processing module: the ALTO core, which can have a set of 1 to N metric storages, either in database format, file format, local variables, etc. In addition, it can also have a set of N' functionalities associated with it (application modules, APP X), which will act on these data by generating added value (filtering, encryption, processing, etc.). The ALTO core can in turn integrate different native functionalities, either those defined in an RFC or other compatible ones, although it is recommended maintaining a complete modularity, not a mixed one. Note that in ALTO core representation there are a North Bound Interface (NBI) and a South Bound Interface (SBI), these modules are abstractions to represent that both inputs as outputs should be modeled in order to enhance interoperability within components. Therefore, these boxes could exist or being logical definitions, depending on the software engineer if they prefer to process in one way or another.

Finally, there will be the exposure module(s), which will make this information accessible to ALTO clients. These modules will not process the data, providing only headers, format (i.e., YANG, IETF, ...) or metadata above that allow transmission through other protocols. In this way, when a client receives the information, the data will be the one that is left from the ALTO core or functionalities. To obtain these network views, the exposure modules can either query the ALTO server or directly call some of the instantiated functionalities, so that they can obtain the data requested by the client. In the scheme presented in Fig. 2, the case where the API contacts the ALTO core to access the functionalities is shown, but it can also ask directly to the applications if during the implementation it is considered more convenient.

If the ALTO client requests a functionality or metric not contemplated by its implementation, it shall return an error message and indicate the available metrics or functionalities. In case the exposure module is asynchronous, it will periodically ask the ALTO core for updates, abstracting the ALTO server from the exposure system implemented at the top level.

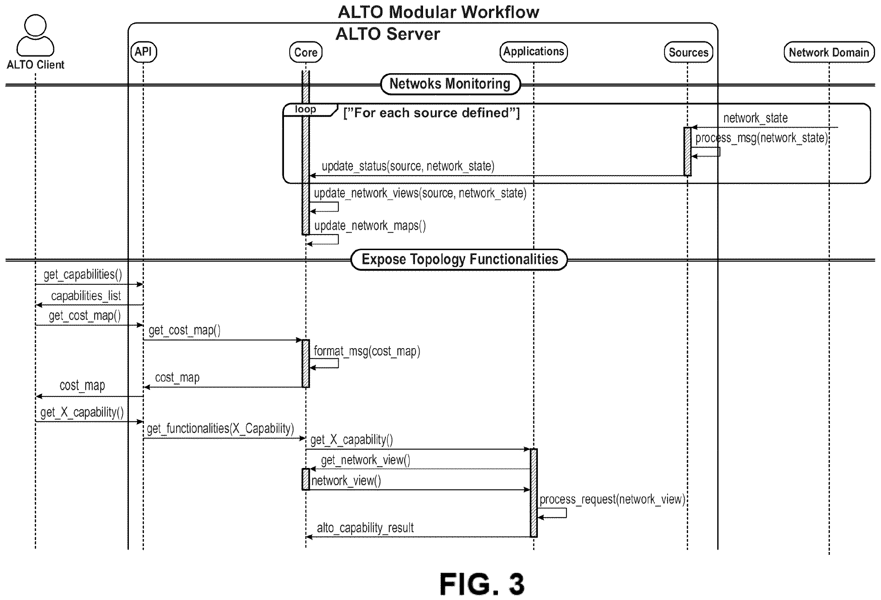

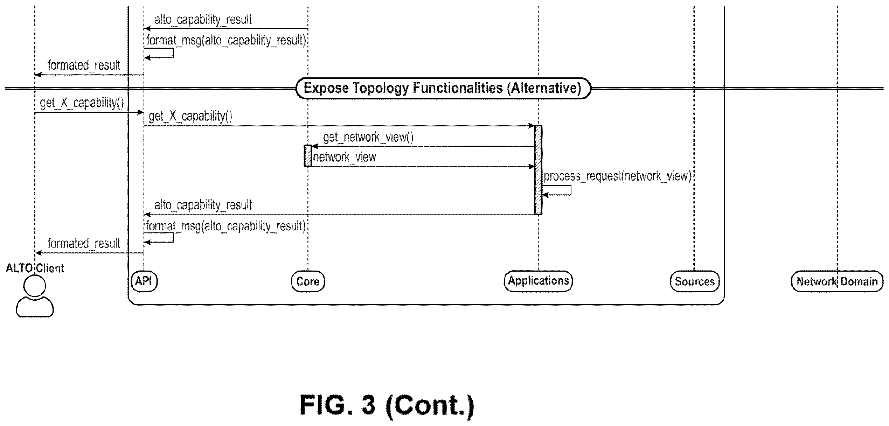

In some embodiments, the components can interact as depicted in Fig. 3, where there are described the two main phases of ALTO workflow: network monitoring and topology exposition functionalities. In these two phases the ALTO server will interact internally between its four main set of components, seeming as a unique component for the external actors (the clients and the network devices).

The workflow starts with the network monitoring phase. In this stage, the network domain sends its status to the data sources module, i.e. the reading modules, referred as sources in the figure, which are responsible for processing and managing this information. For each network domain the invention needs a different module that periodically receives, processes and returns the network status, initiating a cycle in which each source module transforms this information into a common format to be digested by the ALTO core. Particularly, this step is performed periodically in the background to guarantee an updated state of the information.

Once the ALTO core receives the information from the sources, it starts updating its internal network views, updating the network maps and ensuring that the network representations are up to date and aligned with the latest data obtained from the sources.

The second phase of the workflow focuses on exposing the topology functionalities to the ALTO client. In this stage, the ALTO client communicates with the ALTO server by sending various requests through the exposure modules, or API modules. These modules have a pre-defined list of capabilities that can be provided to the ALTO client, so that the ALTO client has information on what information it can request and how. For example, when the ALTO client needs to know the costs associated with the network routes, it will request the cost-map (the cost makes reference to a metric applicable to the route, such as the nominal metrics declared in the routing protocol, the economic cost of the link, the latency of the link, etc.). The API redirects the request to the ALTO core, which formats the cost-map from the network views it has obtained in the monitoring process and sends it back to the client via the API component. This flow is the basic one and is related to those standardized functionalities that are implemented as agreed in the IETF RFCs and will therefore reside in the ALTO core.

In addition to requesting these basic functionalities, the ALTO client may need specific capabilities implemented in certain use cases that are either not defined in RFCs or not implemented in the current version of ALTO Core. In these cases, the API could act in two different ways according to the implementation adopted by the user: the first one is following the standard workflow and asking also to the ALTO Core about these capabilities. This alternative would include an abstraction layer to facilitate the use of customized functionalities without needing special changes in the standardized ALTO Core. The second approach would be to delegate the request to the application module, which would act as an intermediary to obtain the necessary information. This alternative would bring a lower accountability capability but also might be more scalable. To avoid duplicating the figures to both alternatives, only the first alternative is shown. In any case, the workflow with the ALTO Client would remain the same, being an internal design decision transparent to any third party.

The application module, in turn, requests a network view from the ALTO core, which provides the updated data. Once the network view is obtained, the module processes the request and returns the result to the API, which is responsible for formatting the result before sending it back to the ALTO client.

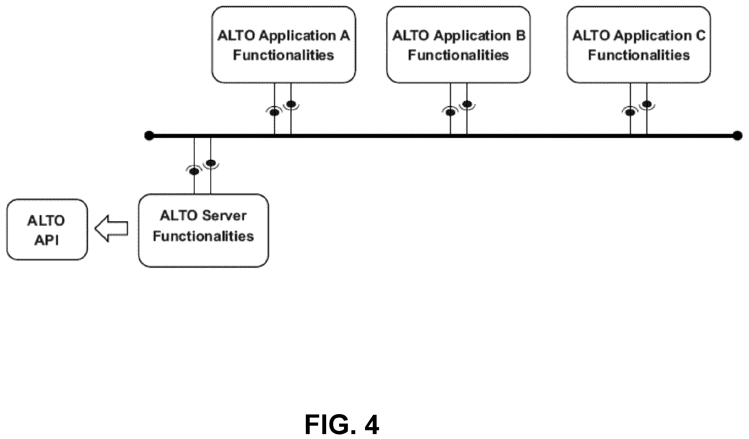

As an alternative architecture to the one depicted in Fig. 2, other architecture schemes are also possible. This is the case of a service-based architecture, as depicted in Fig. 4, where the ALTO applications and ALTO core communicate by means of a communication bus facilitating the interaction not only between applications and server, but also among the applications themselves. This can easily permit the interaction between applications so that a given application can use the existing capabilities of any other application apart from the functionalities of the ALTO server, enabling incremental functionality leveraging on existing functionalities.

As in the previous figure, there could be direct communication between API and Applications. In such case, the ALTO API would make the role of the ALTO Server, implementing the complexity of the selection between applications and providing an abstraction to the ALTO client.

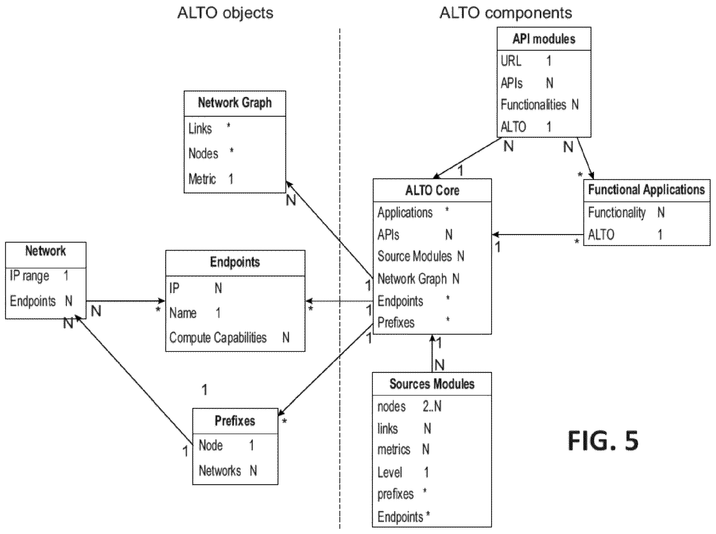

Regarding the integration and interoperability between the different modules, the present invention proposes using internal API definitions with a minimum set of parameters and functions. This will facilitate effective communication between different instances of the same class, maintaining consistency and coherence across the system. An example of the potential minimum set of parameters is presented in Fig. 5, where the four classes defined before are represented and other ALTO objects that could be helpful as context.

As is shown in the Fig. 5, no graph would be exchanged between classes but nodes and links. Also, some other contextual information may be necessary as the metric/s recollected or the data level updated (i.e., if the information refers to IP layer, Application layer, Computation layer or any other potential one). Also, the relations between components should be managed from ALTO core to the other components, working all the rest of the modules as ampliations or complements to the main functionality. Also, there are some modules that might be mandatory , as the system should have at least one exposure module and one reading module, in order to expose and obtain the information.

Regarding the data modeling, the invention addresses four distinct types of data during its processes:
1. Data received by the reading modules from the network. This data is modeled according to the standard protocols in use, such as BGP, LLDP, IETF NBI, etc.
2. Data sent from the reading modules to the ALTO core. At this stage, the data undergoes minimal processing and is transferred internally to the ALTO core. It contains enough information to generate the network graph. Communication at this level could be standardized and tailored to align with the ALTO server's implementation.
3. Data sent from the ALTO core to the exposure modules. This data must conform to a valid standard for ALTO data generation, as if it were intended for direct use by an ALTO client. Current efforts to standardize ALTO communications provide a foundation for this level of communication.
4. Data sent from the exposure modules to the ALTO client. The data must adhere to the protocol being used, including all necessary headers and metadata for accurate processing. It should also support representation in various formats, such as Prometheus entries, IETF formats, or YANG. The core content of the data is derived from the information provided in communication type 2.

While this description pertains to data modeling, the primary focus of this patent lies in defining the architecture. The precise data models for each stage should be developed and standardized by the relevant working groups in accordance with the latest advancements in the field.

The proposed modular architecture marks a transformative advancement in the implementation of the ALTO protocol. By reducing complexity, enhancing flexibility, and fostering standardization, this approach addresses the inherent limitations of the current monolithic system and establishes a foundation for a more adaptable and scalable solution. The proposed solution decomposes the ALTO system into three distinct levels: information sources, application functionalities, and exposure methods. This paradigm shift aims to reduce the coupling between functionalities, thereby simplifying the development of new components and enhancing the flexibility and scalability of the ALTO protocol.

Three key technological advancements can be identified within this approach, which also encompass several other enhancements:
1. Reduced Technological Dependencies: By decoupling the functionalities and standardizing internal communications, the modular architecture allows for multi-vendor implementations and the integration of complementary components from various collaborators. This reduces technological dependencies and fosters a more diverse and adaptable ecosystem.
2. Modular and Configurable Architecture: The proposed architecture facilitates an "easy-to-configure" system that can be tailored to specific contexts and requirements. This flexibility not only simplifies the modification and extension of functionalities but also enables the development of incremental systems, including additional advanced features. This modularity aligns well with the main objectives of the IETF, promoting standardization and interoperability.
3. Enhanced Distributed Paradigm: Supporting a distributed deployment model, the architecture allows components to be strategically placed across network locations as needed. This ensures optimal placement near low-level technological controllers while maintaining centralized control and coordination via the ALTO server.

The proposed modular approach to ALTO implementation is not only technology-agnostic but also sufficiently robust to accommodate a wide range of data sources and network configurations. By leveraging this flexibility, the ALTO protocol can be applied and optimized across diverse scenarios, from traditional network environments to more complex, distributed systems.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method for advanced processing and exposure of network information, the method comprising:
- providing an Application Layer Traffic Optimization, ALTO, server formed by different modular entities including an exposure module, an ALTO core, one or more ALTO applications, and one or more reading modules, the latter being located between the transport network and the application level;
- periodically monitoring, by the one or more reading modules, the transport network by generating network status information based on network information collected from one or more network domains, the network information comprising metadata indicating a type of metric, a metric value, and a timestamp;
- processing, by the ALTO core, the generated network status information received from the one or more reading modules, using at least one processing functionality of the ALTO core, obtaining a network view as a result;
- receiving, by the exposure module, an advanced network information request from an ALTO client;
- routing the advanced network information request to one of the ALTO applications based on the advanced network information request;
- providing, by the ALTO core, the obtained network view to the ALTO application;
- applying, by the ALTO application, at least one application functionality to the network view, obtaining a response to the advanced network information request as a result; and
- routing the response to the advanced network information request back to the ALTO client.

2. The method of claim 1, wherein the advanced network information request is routed by the exposure module directly to the ALTO application.

3. The method of claim 1, wherein the advanced network information request is routed by the exposure module to the ALTO application through the ALTO core.

4. The method of any one of the previous claims, wherein the at least one processing functionality of the ALTO core comprises an Internet Engineering Task Force, IETF, Request for Comments, RFC 7285, functionality.

5. The method of any one of the previous claims, wherein the at least one application functionality comprises applying a filtering technique and/or an encryption technique.

6. The method of any one of the previous claims, wherein the one or more ALTO applications and the ALTO core communicate by means of a communication bus.

7. The method of any one of the previous claims, wherein before processing the generated network status information the method further comprises collecting additional network information from other network domains or segments.

8. The method of any one of the previous claims, wherein before the receiving of the advanced network information request from the ALTO client the method further comprises associating properties for nodes, links or any other element represented in the network information.

9. An application layer traffic optimization (ALTO) server for advanced processing and exposure of network information, comprising a modular architecture formed by:
- an exposure module,
- one or more ALTO applications,
- an ALTO core, and
- one or more reading modules located between the transport network and the application level,
wherein the ALTO core is configured to:
receive network status information from the one or more reading modules, the network status information being generated by the one or more reading modules based on network information collected from one or more network domains, the network information comprising metadata indicating a type of metric, a metric value, and a timestamp;
process the network status information using at least one processing functionality of the ALTO core, obtaining a network view as a result; and
after an advanced network information request being received by the exposure module from an ALTO client and routed to one of the ALTO applications based on the advanced network information request, provide the obtained network view to the ALTO application, the latter further applying at least one application functionality to the network view, obtaining a response to the advanced network information request as a result, and wherein the ALTO server is configured to route the response to the advanced network information request back to the ALTO client.

10. The ALTO server of claim 9, wherein the at least one processing functionality of the ALTO core comprises an Internet Engineering Task Force, IETF, Request for Comments, RFC 7285, functionality.

11. The ALTO server of claim 9 or 10, wherein the at least one application functionality comprises applying a filtering technique and/or an encryption technique.

12. The ALTO server of any one of the previous claims 9-11, wherein the one or more ALTO applications and the ALTO core are configured to communicate using a communication bus.

13. The ALTO server of any one of the previous claims 9-12, wherein before the processing of the generated network status information, the ALTO core is further configured to collect additional network information from network domains or segments.
